Europäisches Patentamt

European Patent Office

Office européen des brevets

(11) Publication number: **0 481 410 A2**

# EUROPEAN PATENT APPLICATION

(21) Application number: **91117506.5**

(22) Date of filing: **14.10.91**

(51) Int. Cl.5: **F16D 1/06**, F04D 29/20

(30) Priority: **16.10.90 IT 3071090**

(43) Date of publication of application:
**22.04.92 Bulletin 92/17**

(84) Designated Contracting States:
**AT BE CH DE DK ES FR GB GR LI LU NL SE**

(71) Applicant: **ASKOLL S.p.A.**
**Via Industria 11, Z.I.**
**I-36030 Povolaro Dueville (Province of Vicenza)(IT)**

(72) Inventor: **Marioni, Elio**
**Via G. Rossi 23**
**I-36031 Dueville (Prov. of Vicenza)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Impeller to rotor coupling device.**

(57) The coupling device for mutually coupling a rotor and an impeller, particularly of pumps with a permanent-magnet electric motor, includes a metallic cylindrical body (1) which is axially fixable to the rotor shaft (3) and which is provided with a protrusion (7) which is arranged in a non-terminal region. The body (1) is accommodatable within an axial cavity (8) of the impeller (9), which defines a first cylindrical portion (10), with an internal sector (11) suitable for being pushed into rotation by the protrusion (7), and a second cylindrical portion (12), smaller in diameter than the first one, inside which the free end (13) of the body (1) is insertable substantially without play.

FIG.1

The present invention relates to an impeller to rotor coupling device, and in particular to an impeller to rotor coupling device for electric pumps with a permanent-magnet motor.

In current electric pumps having a permanent-magnet motor, used in particular in household appliances such as washing machines, dishwashers etc., the device for mutually coupling the rotor and the impeller comprises a metallic cylindrical body which is fixed to the rotor shaft and which is provided with a non-axial front protrusion.

Said cylindrical body and said protrusion are contained in an axial cavity of the impeller which comprises a first cylindrical section which extends into a deeper torus-like cavity which extends along an arc measuring less than 360 degrees.

An abutment sector is thus defined in the impeller and is engaged by the front protrusion of the cylindrical body.

This type of coupling, however, when it is subjected to numerous motor startup and shutdown cycles, has lead to fatigue failure.

In fact, at each actuation, the protrusion of the cylindrical body, due to the rotational impulse of the rotor, collides with considerable force against one of the faces of the sector defined in the corresponding cavity of the impeller.

After several startup cycles, as already mentioned, the material has shown signs of fatigue which has indeed led to the breakage of the protrusion, with consequent damage to the pump.

The aim of the present invention is to provide a coupling device for mutually coupling the rotor and the impeller which avoids the danger of fatigue breakage of its components during use.

A consequent primary object is to extend the life of electric pumps currently used for household appliances such as dishwashers and washing machines.

A further object of the present invention is to provide a coupling device which is constructively simple and has a low cost.

This aim, these objects and others which will become apparent hereinafter are achieved by a coupling device as defined in the appended claims.

Further characteristics and advantages of the invention will become apparent from the detailed description of an embodiment thereof, illustrated only by way of non-limitative example in the accompanying drawings, wherein:

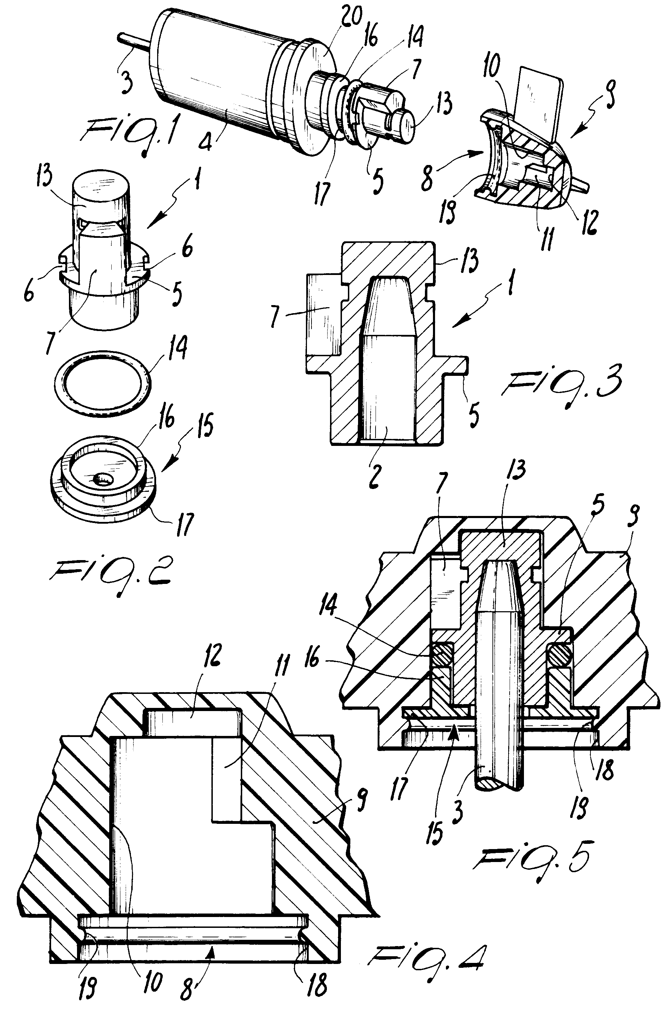

figure 1 is a perspective view of the elements which compose the device according to the invention, spaced apart;

figure 2 is an exploded perspective view of the part of the device which is fixed to the rotor;

figure 3 is a longitudinal sectional view of the cylindrical body which is fixed to the rotor shaft;

figure 4 is a sectional view of the central part of the impeller;

figure 5 is a sectional view of the assembled device.

With reference to the above figures, the device according to the invention comprises a metallic cylindrical body 1 which has an axial hole 2 inside which the corresponding end of the shaft 3 of the rotor 4 of a permanent-magnet motor is insertable.

In a substantially median region, said cylindrical body 1 has a disk-like raised portion 5 provided with two opposite notches 6.

A protrusion 7 in the shape of a cylindrical sector extends laterally to said cylindrical body 1 from said disk-like raised portion 5 toward the part opposite to said rotor 4 and ends in a non-terminal region.

Said cylindrical body 1 is accommodatable in an axial cavity 8 which is centrally defined in the impeller 9, which is made of plastic material, and which comprises a first cylindrical portion 10 slightly larger in diameter than said disk-like raised portion 5.

The first cylindrical portion 10 has an internal sector 11 which is engageable by said protrusion 7 of the cylindrical body 1 upon rotation thereof.

Said axial cavity 8 furthermore comprises a second cylindrical portion 12, having a smaller diameter than the first one, inside which the free end 13 of the cylindrical body 1 is insertable substantially without play.

When the cylindrical body 1 is accommodated in the axial cavity 8 of the impeller 9, a sealing ring 14 of the O-ring type abuts on said disk-like raised portion 5 on the side opposite to the protrusion 7, and is retained within its seat by means of an axially perforated cap 15, which is provided with a tubular portion 16, suitable for inserting itself between the body 1 and the first cylindrical portion 10, and with a disk-shaped portion 17 which is inserted and locked in a third cylindrical portion 18 which is arranged on the side opposite to the second one, which has a larger diameter than the first one, and which is provided with an annular locking ridge 19.

A perforated sector 20 is arranged between the rotor 4 and the cap 15 and has an external knurling suitable for engaging an equivalent knurling of the rotor chamber which is not illustrated in the figures.

A viscous liquid, such as for example an oil or a grease which cushions the movement of the protrusion 7, can be provided within the cavity 8.

Said notches 6 are suitable for allowing the flow of the viscous fluid toward the seat of the sealing ring 14.

The fact that the cylindrical body 1 has its end 13 guided within the second cylindrical portion 12 causes the protrusion 7 to be subjected, at startup, to lower stresses than those currently encountered.

In practice, the impacts to which it is subjected are unable to significantly fatigue its structure and do not lead to its breakage.

The cylindrical body 1 and the cavity 8 of the impeller have no particular constructive difficulties with respect to current ones and can be executed in a simple and inexpensive manner.

In practice it has thus been observed that the coupling device according to the invention has achieved the intended aim and objects.

In practice, the materials employed, so long as compatible with the contingent use, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. Coupling device for mutually coupling a rotor and an impeller, particularly of electric pumps with a permanent-magnet motor, comprising a cylindrical body (1) which is axially fixable to a shaft (3) of the rotor (4) and which is provided with a lateral protrusion (7) which extends in a non-terminal region, said body (1) being accommodatable in an axial cavity (8) defined in the impeller (9) which comprises a first cylindrical portion (10), an internal sector (11) suitable for being pushed into rotation by said protrusion (7), and a second cylindrical portion (12), smaller in diameter than the first cylindrical portion (10), in which a free end (13) defined on said body (1) is insertable substantially without play.

2. Device according to claim 1, characterized in that said shaft (3) of the rotor (4) is insertable in an axial hole (2) defined in said cylindrical body (1).

3. Device according to claim 1, characterized in that said cylindrical body (1) has, in a median region thereof, a disk-like raised portion (5) from which said protrusion (7) extends, said disk-like raised portion (5) having two opposite notches (6).

4. Device according to claims 1 and 3, characterized in that the diameter of said first cylindrical portion (10) of said axial cavity (8) is slightly larger than that of said disk-like raised portion (5) of said body (1).

5. Device according to one or more of the preceding claims, characterized in that a sealing ring (14), for example an O-ring, abuts on said annular raised portion (5) and is pushed into an accommodation seat by an axially perforated cap (15), a tubular portion (16) of said axially perforated cap being insertable between the body (1) and the first cylindrical portion (10) of the cavity (8), and a disk-like portion (17) of said axially perforated cap (15) being fixable in a third cylindrical portion (18) of said cavity (8), said third cylindrical portion (18) being larger in diameter than the first cylindrical portion (10).

6. Device according to one or more of the preceding claims, characterized in that said disk-like portion (17) of said cap (15) is lockable by an annular raised portion (19) which extends inside said third cylindrical portion (18) of said cavity (8).

Fig.1

Fig.2

Fig.3

Fig.4

Fig.5

4